# EUROPÄISCHE PATENTANMELDUNG

(11) **EP 3 711 973 A1**
(43) Veröffentlichungstag der Anmeldung: **23.09.2020**
(21) Anmeldenummer: 20153969.9
(22) Anmeldetag: 28.01.2020
(51) Int. Cl.: B60C 1/00, B60C 11/00, C08L 9/00, C08L 9/06, C08L 21/00

(54) **FAHRZEUGLUFTREIFEN**

(30) Priorität: 22.03.2019 DE 102019203924
(71) Anmelder: Continental Reifen Deutschland GmbH, 30165 Hannover (DE)
(72) Erfinder: Peters, Fabian - c/o Continental AG, 30419 Hannover (DE); Weinreich, Hajo - c/o Continental AG, 30419 Hannover (DE)
(74) Vertreter: Finger, Karsten

(57) **Zusammenfassung**

Die Erfindung betrifft einen Fahrzeugluftreifen mit einem Laufstreifen enthaltend eine mit Schwefel vernetzte Kautschukmischung.

Die Kautschukmischung des zumindest mit der Fahrbahn in Berührung kommenden Teils des Laufstreifens enthält
- wenigstens einen Dienkautschuk,
- wenigstens einen Füllstoff und
- wenigstens ein hydriertes Harz mit Doppelbindungen enthält, wobei der Hydrierungsgrad zwischen 0,5 und 10 % liegt.

## Beschreibung

Die Erfindung betrifft einen Fahrzeugluftreifen mit einem Laufstreifen enthaltend eine mit Schwefel vernetzte Kautschukmischung.

Da die Fahreigenschaften eines Reifens, insbesondere eines Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. Durch den teilweisen oder vollständigen Ersatz des Füllstoffes Ruß durch Kieselsäure in Kautschukmischungen wurden die Fahreigenschaften in den vergangenen Jahren insgesamt auf ein höheres Niveau gebracht. Die bekannten Zielkonflikte der sich gegensätzlich verhaltenden Reifeneigenschaften bestehen allerdings auch bei kieselsäurehaltigen Laufstreifenmischungen weiterhin. So zieht eine Verbesserung des Nassgriffs und des Trockenbremsens weiterhin in der Regel eine Verschlechterung des Rollwiderstandes, der Wintereigenschaften und des Abriebverhaltens nach sich. Auch der Nassgriff und das Handlingverhalten verhalten sich in der Regel gegensätzlich da eine für einen guten Nassgriff weichere Mischung üblicherweise mit einer weniger steifen Mischung einhergeht, die dann aber ein schlechteres Handlingverhalten aufweist.

Um die vorgenannten Zielkonflikte zu lösen, sind schon vielfältige Ansätze verfolgt worden. So hat man beispielsweise unterschiedlichste, auch modifizierte Polymere, Harze, Weichmacher und hochdisperse Füllstoffe für Kautschukmischungen eingesetzt und man hat versucht, die Vulkanisateigenschaften durch Modifikation der Mischungsherstellung zu beeinflussen.

Aus der EP 2 142 387B1ist es bekannt, das Abriebverhalten und den Rollwiderstand eines Fahrzeugluftreifens zu verbessern, indem der Laufstreifen eine Mischung aufweist, die einen Dienkautschuk, eine Füllstoff und ein Erdölkohlenwasserstoffharz mit einem zahlenmittleren Molekulargewicht Mₙ von 750 bis 1000 g/mol, einer Glasübergangstemperatur T_{g} von 20 bis 60 °C und einem Polydispersitätsindex von 1,8 bis 3 enthält, wobei das Harz Einheiten umfasst, die aus der Polymerisation von Dicyclopentadien und Dicyclopentadiencodimeren mit einer olefinischen Zusammensetzung resultieren.

In der US 9,062,189 B2 werden sogenannte Kohlenwasserstoff-Polymer-Additive ("hydrocarbon polymer additives", HPA) als Zuschlagstoffe für Laufstreifenmischungen offenbart, die aromatische Prozessöle ersetzen sollen, ohne die Reifeneigenschaften negativ zu beeinflussen. Die Gruppe der Kohlenwasserstoff-Polymer-Additive umfasst z. B. aliphatische Kohlenwasserstoffharze, aromatische modifizierte aliphatische Kohlenwasserstoffharze und Polycacylopentadienharze. Als Beispiele werden die piperylenbasierten Harze Oppera™PR373N und Oppera™394A der Firma ExxonMobil Chemical Company angegeben, deren Polydispersitätsindices bei 1,9 und 2,8 liegen.

Der vorliegenden Erfindung liegt die Aufgabe zugrunde, einen Fahrzeugluftreifen bereitzustellen, der hinsichtlich des Zielkonfliktes zwischen dem Handlingverhalten und dem Nassgriff verbessert ist.

Gelöst wird diese Aufgabe dadurch, dass die Kautschukmischung des zumindest mit der Fahrbahn in Berührung kommenden Teils des Laufstreifens
- wenigstens einen Dienkautschuk,
- wenigstens einen Füllstoff und
- wenigstens ein hydriertes Harz mit Doppelbindungen enthält, wobei der Hydrierungsgrad zwischen 0,5 und 10 % liegt.

Überraschenderweise weist ein Fahrzeugluftreifen mit einer derartigen Kautschukmischung im zumindest mit der Fahrbahn in Berührung kommenden Teil des Laufstreifens einen verbesserten Nassgriff bei einem Handlingverhalten auf hohem Niveau auf. Dies kann nur bei Vorhandensein des speziellen Kohlenwasserstoffharzes in der Kautschukmischung mit Dienkautschuk und Füllstoff erreicht werden.

Die erfindungsgemäße Kautschukmischung enthält wenigstens einen Dienkautschuk. Demnach können auch mehrere Kautschuke im Verschnitt eingesetzt werden.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen. Bei den Dienkautschuken kann es sich z. B. um natürliches Polyisopren und/oder synthetisches Polyisopren und/oder Polybutadien (Butadien-Kautschuk) und/oder Styrol-Butadien-Copolymer (Styrol-Butadien-Kautschuk) und/oder epoxidiertes Polyisopren und/oder Styrol-Isopren-Kautschuk und/oder Halobutyl-Kautschuk und/oder Polynorbornen und/oder Isopren-Isobutylen-Copolymer und/oder Ethylen-Propylen-DienKautschuk handeln. Die Kautschuke können als reine Kautschuke oder in ölverstreckter Form eingesetzt werden.

Bevorzugt handelt es sich bei dem oder den Dienkautschuk(en) jedoch um natürliches Polyisopren (NR) und/oder synthetisches Polyisopren (IR) und/oder Polybutadien (BR, Butadien-Kautschuk) und/oder Styrol-Butadien-Copolymer (SBR, Styrol-Butadien-Kautschuk).

Bei dem natürlichen und/oder synthetischen Polyisopren kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren; der cis-1,4-Anteil im Naturkautschuk ist größer 99 Gew.-%. Ferner ist auch ein Gemisch eines oder mehrerer natürlicher Polyisoprene mit einem oder mehreren synthetischen Polyisoprenen denkbar. Natürliches Polyisopren wird verstanden als Kautschuk, der durch Ernte von Quellen wie Kautschukbäumen (Hevea brasiliensis) oder nicht-Kautschukbaumquellen (wie z. B. Guayule oder Löwenzahn (z. B. Taraxacum koksaghyz)) gewonnen werden kann. Unter natürlichem Polyisopren (NR) wird nicht synthetisches Polyisopren verstanden.

Bei dem Butadien-Kautschuk (BR, Polybutadien) kann es sich um alle dem Fachmann bekannten Typen mit einem Mw von 250000 bis 5000000 g/mol handeln. Darunter fallen u. a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z. B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt. Das eingesetzte Polybutadien kann mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder SiloxanGruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Bei dem Styrol-Butadien-Kautschuk (Styrol-Butadien-Copolymer) kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet. Bevorzugt sind in jedem Fall Styrol-Butadien-Copolymere mit einem Mw von 250000 bis 600000 g/mol (zweihundertfünfzigtausend bis sechshunderttausend Gramm pro Mol).

Das oder die eingesetzte(n) Styrol-Butadien-Copolymere kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder SiloxanGruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Gemäß einer bevorzugten Weiterbildung der Erfindung enthält die Kautschukmischung mehr als 80 phr wenigstens eines Styrol-Butadien-Copolymers. So werden besonders gute Werte hinsichtlich des Nassgriff erzielt.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen und dadurch festen Kautschuke bezogen.

Um den Nassgriff und das Handlingverhalten weiter zu verbessern, hat es sich als vorteilhaft erwiesen, wenn die Kautschukmischung mehr als 50 phr zumindest eines lösungspolymerisierten Styrol-Butadien-Copolymers enthält.

Gemäß der Erfindung enthält die Kautschukmischung für zumindest den mit der Fahrbahn in Berührung kommenden Teil des Laufstreifens wenigstens einen Füllstoff. Die Kautschukmischung kann dabei unterschiedliche Füllstoffe, wie Ruße, Kieselsäuren, Alumosilicate, Kreide, Stärke, Magnesiumoxid, Titandioxid oder Kautschukgele in üblichen Mengen enthalten, wobei die Füllstoffe in Kombination eingesetzt werden können. Weiterhin sind Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen) denkbar. Auch Graphit und Graphene sowie sogenannte "carbon-silica dual-phase filler" sind als Füllstoff einsetzbar.

Vorzugsweise werden als Füllstoff Ruß und/oder Kieselsäure eingesetzt.

Ist in der Kautschukmischung Ruß enthalten, können alle dem Fachmann bekannten Ruß-Typen eingesetzt werden. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist. Hiermit werden für die Anwendung im Fahrzeugreifen besonders gute Rollwiderstandsindikatoren (Rückprallelastizität bei 70 °C) bei guten sonstigen Reifeneigenschaften erzielt.

Enthält die Kautschukmischung Kieselsäure, können unterschiedlichste Kieselsäuren, wie "low surface area" oder hoch dispergierbare Kieselsäure, auch im Gemisch, zum Einsatz kommen. Besonders bevorzugt ist es, wenn eine fein verteilte, gefällte Kieselsäure verwendet wird, die eine CTAB-Oberfläche (gemäß ASTM D 3765) von 30 bis 350 m²/g, vorzugsweise von 110 bis 250 m²/g, aufweist. Als Kieselsäuren können sowohl konventionelle Kieselsäuren wie die des Typs VN3 (Handelsname) der Firma Evonik als auch hoch dispergierbare Kieselsäuren, so genannte HD-Kieselsäuren (z. B. Ultrasil 7000 der Firma Evonik), zum Einsatz kommen.

Die Mengen an Füllstoff liegen in den Fachmann bekannten Bereichen. Vorzugsweise enthält die Kautschukmischung mehr als 50 phr Füllstoff, um den Rollwiderstand und das Abriebverhalten zu verbessern.

Zur Verbesserung der Verarbeitbarkeit und zur Anbindung eines ggf. vorhandenen polaren Füllstoffes an den Kautschuk können der Kautschukmischung Silan-Kupplungsagenzien zugesetzt werden. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Derartige Silan-Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: - SCN, -SH, -NH2 oder -Sx- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. Die Silan-Kupplungsagenzien können dabei auch als Gemisch mit Industrieruß zugesetzt werden, wie z. B. TESPT auf Ruß (Handelsname X50S der Firma Evonik). Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT® in verschiedenen Varianten von der Firma Momentive, USA, oder solche, die unter dem Namen VP Si 363 von der Firma Evonik Industries vertrieben werden. Einsetzbar sind auch sogenannte "silated core polysulfides" (SCP, Polysulfide mit silyliertem Kern), die z. B. in der US 20080161477 A1 und der EP 2 114 961 B1 beschrieben werden.

Das für die Laufstreifenmischung des Fahrzeugluftreifens eingesetzt spezielle hydrierte Harz mit Doppelbindungen weist einen Hydrierungsgrad von 0,5 bis 10 %, vorzugsweise von 0,5 bis 5 %, auf. Der Grad der Hydrierung lässt sich z. B. daran festmachen, um wieviel der Aromaten- bzw. Olefinanteil im Vergleich zu denen im nicht hydrierten Harz abgenommen hat. Der Grad der Hydrierung sollte den geringen Hydrierungsgrad von 10 % nicht übersteigen, da dann der positive Einfluss auf Nassgriff und Handling nicht beobachtet werden kann.

Als Kohlenwasserstoffharze können alle dem Fachmann bekannten Harze mit den vorgenannten Eigenschaften eingesetzt werden. Dabei kann es sich z. B. um Kohlenwasserstoffharze des C5- und/oder C9-Typs, aromatisch-modifizierte aliphatische Kohlenwasserstoffharze, Polycyclopentadienharze, Terpen-Phenol-Harze oder Inden-Cumaron-Harze handeln. Es können mehrere Harze um Gemisch eingesetzt werden.

Vorzugsweise handelt es sich bei dem Harz um ein Terpen-Phenol-Harz. Mit diesen Harztypen konnten Reifen mit besonders gutem Eigenschaftsprofil erhalten werden. So kann beispielsweise das hydrierte Terpen-Phenol-Harz YS POLYSTER TH130 der Firma Yasuhara eingesetzt werden.

Für eine gute Verarbeitbarkeit der Kautschukmischung hat es sich von Vorteil erwiesen, wenn das Harz ein zahlenmittleres Molekulargewicht Mₙ von weniger als 1500 g/mol, vorzugsweise weniger als 1200 g/mol, aufweist.

Gemäß einer bevorzugten Weiterbildung der Erfindung weist das Harz einen Polydispersitätsindex von weniger als 1,7 auf. Der Polydispersitätsindex ist das Verhältnis von gewichtmittlerem Molekulargewicht M_{w} zu zahlenmittlerem Molekulargewicht Mₙ.

Der Anteil an Doppelbindungen eines Harzes lässt sich mit der Jodadsorptionszahl in Verbindung bringen, da Jod mit den im Harz noch vorhandenen Doppelbindungen reagiert. Auf diese Weise können auch Rückschlüsse auf den Hydrierungsgrad gezogen werden und es kann bestimmt werden, ob ein Harz vollständig hydriert ist. Bei vollständiger Hydrierung kann keine Jodadsorptionszahl mehr ermittelt werden, da keine Doppelbindungen mehr vorhanden sind.

Vorzugsweise weist das hydrierte Harz mit Doppelbindungen eine Jodadsorptionszahl von weniger als 70 g I₂/100 g, besonders bevorzugt von weniger als 65 g I₂/100 g auf. Der verblieben Anteil an Doppelbindungen sorgt für eine optimale Einbindung in die umgebende Polymermatrix und gute Reifeneigenschaften.

Um ein besonders ausgewogenes Verhältnis von Nassgriff und Handlingeigenschaften zu erzielen und ohne andere Reifeneigenschaften nachteilig zu beeinflussen, hat es sich als vorteilhaft erwiesen, wenn die Kautschukmischung für zumindest den mit der Fahrbahn in Berührung kommenden Teil des Laufstreifens 5 bis 50 phr des wenigstens einen hydrierten Harzes mit Doppelbindungen enthält.

In der Kautschukmischung können Weichmacher in Mengen von 1 bis 90 phr, bevorzugt von 5 bis 70 phr, besonders bevorzugt von 15 bis 60 phr, enthalten sein. Als Weichmacher können alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubberto-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder Weichmacherharze oder Flüssig-Polymere, wie flüssiges Polybutadien - auch in modifizierter Form - eingesetzt werden. Der oder die Weichmacher werden bei der Herstellung der erfindungsgemäßen Kautschukmischung bevorzugt in wenigstens einer Grundmischstufe zugegeben.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) oder Zinkkomplexe wie z. B. Zinkethylhexanoat,
c) Wachse,
d) Mastikationshilfsmittel, wie z. B. 2,2'-Dibenzamidodiphenyldisulfid (DBD), und
f) Verarbeitungshilfsmittel, wie z.B. Fettsäuresalze, wie z.B. Zinkseifen, und Fettsäureester und deren Derivate.

Der Mengenanteil der Gesamtmenge an weiteren Zusatzstoffen beträgt 3 bis 150 phr, bevorzugt 3 bis 100 phr und besonders bevorzugt 5 bis 80 phr.

Die Vulkanisation der Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern. Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS).

Außerdem kann die Kautschukmischung Vulkanisationsverzögerer enthalten.

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe bestehend aus z. B. Thiuramdisulfiden, wie z. B. Tetrabenzylthiuramdisulfid (TBzTD), Tetramethylthiuramdisulfid (TMTD) oder Tetraethylthiuramdisulfid (TETD), Thiuramtetrasulfiden, wie z. B. Dipentamethylenthiuramtetrasulfid (DPTT), Dithiophosphaten, wie z. B. DipDis (Bis-(Diisopropyl)thiophosphoryldisulfid), Bis(O,O-2-ethylhexyl-thiophosphoryl)Polysulfid (z. B. Rhenocure SDT 50®, Rheinchemie GmbH, Zinkdichloryldithiophosphat (z. B. Rhenocure ZDT/S®, Rheinchemie GmbH) oder Zinkalkyldithiophosphat, und 1,6-Bis(N,N-dibenzylthiocarbamoyldithio)hexan und Diarylpolysulfiden und Dialkylpolysulfiden.

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049216 A2 beschrieben sind, können in der Kautschukmischung eingesetzt werden. Das letztere System enthält ein Vulkanisationsmittel, welches mit einer Funktionalität größer vier vernetzt und zumindest einen Vulkanisationsbeschleuniger.

Der Kautschukmischung wird bei deren Herstellung bevorzugt wenigstens ein Vulkanisationsmittel ausgewählt aus der Gruppe bestehend aus Schwefel, Schwefelspender, Vulkanisationsbeschleuniger und Vulkanisationsmittel, die mit einer Funktionalität größer vier vernetzen, in der Fertigmischstufe zugegeben. Hierdurch lässt sich aus der gemischten Fertigmischung durch Vulkanisation eine schwefelvernetzte Kautschukmischung für die Anwendung im Fahrzeugluftreifen herstellen.

Die Begriffe "vulkanisiert" und "vernetzt" werden im Rahmen der vorliegenden Erfindung synonym verwendet.

Die Herstellung der Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z. B. durch einen Extrusionsvorgang weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die Kautschukmischung wird für die Herstellung von Fahrzeugluftreifen, wie PKW-, LKW- oder Zweiradreifen, verwendet, wobei die Kautschukmischung zumindest den mit der Fahrbahn in Berührung kommenden Teil des Laufstreifens bildet.

Bei einem Fahrzeugluftreifen kann der Laufstreifen aus einer einzigen Mischung bestehen, die dann einen Dienkautschuk, einen Füllstoff und das spezielle Harz enthält. Häufig weisen Fahrzeugluftreifen heute jedoch einen Laufstreifen mit einer sogenannten Cap/Base-Konstruktion auf. Unter "Cap" wird dabei der mit der Fahrbahn in Berührung kommende Teil des Laufstreifens verstanden, der radial außen angeordnet ist (Laufstreifenoberteil oder Laufstreifencap). Unter "Base" wird dabei der Teil des Laufstreifens verstanden, der radial innen angeordnet ist, und somit im Fahrbetrieb nicht oder nur am Ende des Reifenlebens mit der Fahrbahn in Berührung kommt (Laufstreifenunterteil oder Laustreifenbase). Bei einem Fahrzeugluftreifen mit einer solchen Cap/Base-Konstruktion ist zumindest die Kautschukmischung für die Cap mit Dienkautschuk, Füllstoff und dem speziellen Harz ausgebildet.

Der erfindungsgemäße Fahrzeugluftreifen kann auch einen Laufstreifen aufweisen, der aus verschiedenen nebeneinander und/oder untereinander angeordneten Laufstreifenmischungen besteht (Multikomponentenlaufstreifen).

Bei der Herstellung des Fahrzeugluftreifens wird die Mischung als Fertigmischung vor der Vulkanisation in die Form eines Laufstreifens, bevorzugt wenigstens in die Form einer Laufstreifencap, gebracht und bei der Herstellung des Fahrzeugreifenrohlings wie bekannt aufgebracht. Der Laufstreifen, bevorzugt wenigstens die Laufstreifencap, kann auch in Form eines schmalen Kautschukmischungsstreifens auf einen Reifenrohling aufgewickelt werden.

Die Erfindung soll nun anhand von Vergleichs- und Ausführungsbeispielen, die in der Tabelle 1 zusammengefasst sind, näher erläutert werden.
Die Vergleichsmischung ist dabei mit V, die erfindungsgemäße Mischung ist mit E gekennzeichnet.

Die Mischungsherstellung erfolgte nach den in der Kautschukindustrie üblichen Verfahren unter üblichen Bedingungen in drei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. In der zweiten Mischstufe wurde die Grundmischung nochmals durchmischt. Durch Zugabe des Vulkanisationssystems in der dritten Stufe (Fertigmischstufe) wurde die Fertigmischung erzeugt, wobei bei 90 bis 120 °C gemischt wurde.

Aus sämtlichen Mischungen wurden Prüfkörper durch 20-minütige Vulkanisation unter Druck bei 160 °C hergestellt und mit diesen Prüfkörpern für die Kautschukindustrie typische Materialeigenschaften mit den im Folgenden angegebenen Testverfahren ermittelt:
- Rückprallelastizität bei Raumtemperatur gemäß DIN 53 512
- Shore-A-Härte bei Raumtemperatur und 70°C mittels Durometer gemäß DIN ISO 7619-1 als Indikator für das Bremsverhalten
- dynamischer Speichermodul E' aus dynamisch-mechanischer Messung bei 55 °C gemäß DIN 53 513, Dehnungsdurchlauf (engl. "strain sweep") bei 0,15 % Dehnung als Indikator für das Handlingverhalten im Normalbetrieb
- dynamischer Speichermodul E' aus dynamisch-mechanischer Messung bei 100 °C gemäß DIN 53 513, Dehnungsdurchlauf (engl. "strain sweep") bei 0,15 % Dehnung als Indikator für das Handlingverhalten im Rennbetrieb

**Tabelle 1**

| **Bestandteile** | **Einheit** | **V1** | **E2** |
|---|---|---|---|
| E-SBR^{a} | phr | 55 | 55 |
| S-SBR^{b} | phr | 82,5 | 82,5 |
| RußN121 | phr | 15 | 15 |
| Kieselsäure^{c} | phr | 115 | 115 |
| Weichmacher | phr | 3 | 3 |
| Harz A^{d} | phr | 30 | - |
| hydriertes Harz B^{e} | phr | - | 30 |
| Silan-Kupplungsagens^{f} | phr | 8 | 8 |
| Ozonschutzwachs | phr | 2 | 2 |
| Alterungsschutzmittel | phr | 6 | 6 |
| Zinkoxid | phr | 3 | 3 |
| Stearinsäure | phr | 2 | 2 |
| Beschleuniger | phr | 7,1 | 7,1 |
| Schwefel | phr | 1 | 1 |

| **Eigenschaften** | | | |
|---|---|---|---|
| Rückprallelastizität bei RT | % | 9 | 9 |
| Shore A-Härte bei RT | ShoreA | 76 | 74 |
| Shore A-Härte bei 70 °C | ShoreA | 69 | 67 |
| E'(0,15 %) bei 55 °C | MPa | 22 | 23 |
| E'(0,15 %) bei 100 °C | MPa | 16 | 17 |

| | | | |
|---|---|---|---|
| ^{a)} emulsionspolymerisiertes Styrol-Butadien-Copolymer, Styrolgehalt: 40 %, ölverstreckt mit 37,5 phr Öl pro 100 phr Kautschuk ^{b)} lösungspolymerisiertes Styrol-Butadien-Copolymer, Styrolgehalt: 40 %, Vinylgehalt: 24 %, ölverstreckt mit 37,5 phr Öl pro 100 phr Kautschuk ^{c)} Ultrasil® VN3, Evonik Industries ^{d)} Terpen-Phenol-Harz, Mₙ = 820 g/mol, Polydispersitätsindex = 1,4, Jodadsorptionszahl = 76,7 g I₂/100 g, YS Polyester T130 der Firma Yasuhara ^{e)} hydriertes Terpen-Phenol-Harz, Mₙ = 820 g/mol, Polydispersitätsindex = 1,4, Jodadsorptionszahl = 63 g I₂/100 g, YS Polyester TH130 der Firma Yasuhara ^{f)} S₂-Silan: TESPD | | | |

Aus der Tabelle 1 wird ersichtlich, dass bei Verwendung des mild hydrierten Harzes mit Doppelbindungen in der Kautschukmischung E1 die Härte der Vulkanisate im Vergleich zur Mischung mit dem nicht-hydrierten Harz mit gleicher Grundstruktur (Mischung V1) abnimmt. Die Vulkanisate werden also weicher. Die abnehmende Härte bei Raumtemperatur dient dabei als Indikator für ein besseres Bremsverhalten auf nasser Straße (Nassgriff) bei Verwendung der Mischung als Laufstreifen von Fahrzeugluftreifen. Die abnehmende Härte bei 70 °C dient als Hinweis für ein besseres Bremsverhalten auf trockener Fahrbahn.
Gleichzeitig erhöht sich überraschenderweise beim Übergang vom nicht hydrierten zum mildhydrierten Harz bei den Vulkanisaten der dynamischer Speichermodul E' aus dynamisch-mechanischer Messung bei 0,15 % Dehnung sowohl bei 55 °C als auch bei 100 °C leicht, d. h. die Vulkanisate werden steifer. Daraus lässt sich beim Einsatz der Mischung als Laufstreifen von Fahrzeugluftreifen auf einer verbessertes Handlingverhalten sowohl im Normalbetrieb als auch unter hoher Lauftemperatur, wie unter Rennbedingungen, schließen.

## Patentansprüche

1. Fahrzeugluftreifen mit einem Laufstreifen enthaltend eine mit Schwefel vernetzte Kautschukmischung, **dadurch gekennzeichnet, dass** die Kautschukmischung des zumindest mit der Fahrbahn in Berührung kommenden Teils des Laufstreifens
- wenigstens einen Dienkautschuk,
- wenigstens einen Füllstoff und
- wenigstens ein hydriertes Harz mit Doppelbindungen enthält, wobei der Hydrierungsgrad zwischen 0,5 und 10 % liegt.

2. Fahrzeugluftreifen nach Anspruch 1, **dadurch gekennzeichnet, dass** die Kautschukmischung mehr als 80 phr wenigstens eines Styrol-Butadien-Copolymers enthält.

3. Fahrzeugluftreifen nach Anspruch 2, **dadurch gekennzeichnet, dass** die Kautschukmischung mehr als 50 phr wenigstens eines lösungspolymerisierten Styrol-Butadien-Copolymers enthält.

4. Fahrzeugluftreifen nach zumindest einem der vorhergehenden Ansprüche, **dadurch gekennzeichnet, dass** der Hydrierungsgrad zwischen 0,5 und 5 % liegt.

5. Fahrzeugluftreifen nach zumindest einem der vorhergehenden Ansprüche, **dadurch gekennzeichnet, dass** das Harz ein Terpen-Phenol-Harz ist.

6. Fahrzeugluftreifen nach zumindest einem der vorhergehenden Ansprüche, **dadurch gekennzeichnet, dass** das Harz ein zahlenmittleres Molekulargewicht Mₙ von weniger als 1500 g/mol, vorzugsweise weniger als 1200 g/mol, aufweist.

7. Fahrzeugluftreifen nach zumindest einem der vorhergehenden Ansprüche, **dadurch gekennzeichnet, dass** das Harz einen Polydispersitätsindex von weniger als 1,7 aufweist.

8. Fahrzeugluftreifen nach zumindest einem der vorhergehenden Ansprüche, **dadurch gekennzeichnet, dass** das Harz eine Jodadsorptionszahl von weniger als 70 g I₂/100 g, vorzugsweise von weniger als 65 g I₂/100 g, aufweist.

9. Fahrzeugluftreifen nach zumindest einem der vorhergehenden Ansprüche, **dadurch gekennzeichnet, dass** die Kautschukmischung 5 bis 50 phr des wenigstens einen hydrierten Harzes mit Doppelbindungen enthält.
